# NEUE EUROPÄISCHE PATENTSCHRIFT

(11) **EP 0 421 269 B2**
(45) Veröffentlichungstag und Bekanntmachung des Hinweises auf die Entscheidung über den Einspruch: **02.05.2002**
(45) Hinweis auf die Patenterteilung: 10.01.1996
(21) Anmeldenummer: 90118532.2
(22) Anmeldetag: 27.09.1990
(51) Int. Cl.: C08J 9/12, C08G 18/00, C08G 18/76, B32B 27/00, F25D 11/00

(54) **Verfahren zur Herstellung von Polyurethan-Hartschaumstoffen mit geringer Wärmeleitfähigkeit und ihre Verwendung**
Process for the preparation of rigid polyurethane foams with low heat-conductivity and their use
Procédé pour la préparation de mousses de polyuréthane rigides ayant une conductibilité de chaleur réduite

(30) Priorität: 06.10.1989 DE 3933335
(43) Veröffentlichungstag der Anmeldung: 10.04.1991
(73) Patentinhaber: BASF Aktiengesellschaft, 67063 Ludwigshafen (DE)
(72) Erfinder: Volkert, Otto, Dr., W-6719 Weisenheim (DE)
(74) Vertreter: Geissler, Bernhard, Dr. jur., Dipl.-Phys.

(56) Entgegenhaltungen:
- EP-A- 0 355 713
- EP-A- 0 389 011
- EP-A- 0 405 439
- DE-A- 2 544 560
- DE-A- 3 430 285
- GB-A- 876 977
- US-A- 3 586 651
- US-A- 3 694 385
- US-A- 4 795 763
- Kunststoffe, Bd. 79, Nr. 4, April 1989, M. Mann, B. Phillips, "FCKW-Blähmittel in Hartschaumstoffen", S. 329 331, 332
- Encyclopedia of Polymer Science and Engineering, Bd. 3, 1985, John Wiley and Sons, New York, S. 25
- Proc. Roy. Soc. (London), Bd. A 231, 1955, S. 280-295, J.D. Lambert et. al., "Transport properties of gaseous hydrocarbons"
- ESDU engineering sciences data, "Thermal conductivity of gaseous aliphatic hydrocarbons", Part I, Alkanes, Oktober 1989, ESDU International plc, 89035
- ESDU engineering sciences data, "Thermal conductivity of miscellaneous gaseous hydrocarbons", November 1991, 91030, S. 51

## Beschreibung

Gegenstände der Erfindung sind ein Verfahren zur Herstellung von Polyurethan - im folgenden abgekürzt PU genannte Hartschaumstoffen aus an sich bekannten Aufbaukomponenten in Gegenwart von Cyclopentan oder Mischungen aus Cyclopentan bzw. des Gemischs aus Cyclopentan und Cyclohexan und mindestens einer mit Cyclopentan und/oder Cyclohexan homogen mischbaren Verbindung mit einem Siedepunkt unter 35°C, ausgewählt aus der Gruppe der Alkane, Cycloalkane mit maximal 4 Kohlenstoffatomen, Dialkylether, Cycloalkylenether und Fluoralkane sowie gegebenenfalls Wasser als Treibmittel und die Verwendung dieser PU-Hartschaumstoffe zum Ausschäumen von Hohlräumen in Kühlmöbeln oder Heizungselementen sowie als Dämmstoff für Verbundelemente.

Die Herstellung von Verbund- oder Sandwichelementen, die aufgebaut sind aus einem PU-Hartschaumstoff und mindestens einer Deckschicht aus einem starren oder elastischen Material, wie z.B. Papier, Kunststoffolien, Metallblechen, Glasvliesen, Spanplatten u.a., ist bekannt. Bekannt ist ferner die Ausschäumung von Hohlräumen in Haushaltgeräten, wie Kühlmöbeln, beispielsweise Kühlschränken oder -truhen oder von Heißwasserspeichern, mit PU-Hartschaumstoff als Wärmedämmstoff. Um Schaumfehlstellen zu vermeiden, muß hierzu das schaumfähige PU-Reaktionsgemisch innerhalb einer kurzen Zeit in den zu isolierenden Hohlraum eingefüllt werden. Zum Ausschäumen derartiger Gegenstände werden üblicherweise Niederdruck- oder vorzugsweise Hochdruckmaschinen eingesetzt.

Hierfür geeignete wärme- und kältedämmende PU-Hartschaumstoffe können bekanntermaßen durch Umsetzung von organischen Polyisocyanaten mit einer oder mehreren höhermolekularen Verbindungen mit mindestens zwei reaktiven Wasserstoffatomen, vorzugsweise Polyester- und/oder Polyether-polyolen, sowie üblicherweise unter Mitverwendung von niedermolekularen Kettenverlängerungsmitteln und/oder Vernetzungsmitteln in Gegenwart von Treibmitteln, Katalysatoren und gegebenenfalls Hilfsmitteln und/oder Zusatzstoffen hergestellt werden. Bei geeigneter Wahl der Aufbaukomponenten können hierbei PU-Hartschaumstoffe erhalten werden mit einer niedrigen Wärmeleitzahl und guten mechanischen Eigenschaften.

Eine zusammenfassende Übersicht über die Herstellung von PU-Hartschaumstoffen und ihre Verwendung als Deck- oder vorzugsweise Kernschicht in Verbundelementen sowie ihre Anwendung als Dämmschicht in der Kühl- oder Heizungstechnik wurde z.B. publiziert in Polyurethane, Kunststoff-Handbuch, Band 7, 1. Auflage 1966, herausgegeben von Dr. R. Vieweg und Dr. A. Höchtlen, und z. Auflage 1983, herausgegeben von Dr. Günter Oertel, Carl Hanser Verlag, München, Wien.

Als Treibmittel zur Herstellung der wärme- und kältedämmenden PU-Hartschaumstoffe werden weltweit in großem Maßstabe Chlorfluoralkane, vorzugsweise Trichlorfluormethan, eingesetzt. Nachteilig an diesen Treibgasen ist lediglich die Belastung der Umwelt, da sie in Verdacht stehen, in der Stratosphäre am Abbau der Ozonschicht beteiligt zu sein.

Neben dem genannten Trichlorfluormethan, finden auch andere physikalisch wirkende Treibmittel zur Herstellung von PU-Hartschaumstoffen Verwendung. Beispielhaft genannt werden in der DE-C-1 045 644 (US 3 391 093) gasförmige Kohlenwasserstoffe mit nicht mehr als 3 C-Atomen, wie Methan, Ethan, Ethylen, Propan und Propylen und halogenierte Kohlenwasserstoffe wie z.B. Chlormethan, Dichlordifluormethan, Dichlorfluormethan, Chlordifluormethan, Chlorethan und Dichlortetrafluorethan sowie Octafluorcyclobutan und Hexafluorpropan, in den ausgelegten Unterlagen des Belgischen Patents Nr. 596 608 Halogenalkane, wie z.B. 1,1-Difluor-2,2-dichlorethan, 1,2-Difluor-1,2-dichlorethan, 1,1-Dichlorethan, 1-Fluor-1,2-dichlorethan, 1-Fluor-2,2-dichlorethan, 1,2-Dichlorethan, Trichlorethan, Tetrachlorethan, 1-Fluor-1,2,2-trichlorethan, 1-Bromethan und 1,1,2-Trifluor-2-chlorethan und in der PCT-Anmeldung WO 89/00594 1,1,1-Trichlorethan, das im Gemisch mit anderen Treibmittel verwendet wird.

Die genannten Treibmittel weisen den Nachteil auf, daß sie zumindest teilweise toxisch sind, im Vergleich zu Trichlorfluormethan aufgrund ihres Siedepunkts eine niedrigere Gasbeute beim Aufblähen des PU-Schaumstoffes besitzen, dem PU-Hartschaumstoff eine geringe Isolierwirkung verleihen und/oder ein Schrumpfen des Schaumstoffes verursachen sowie zur Ausbildung von Hohlräumen im Schaumstoffkern oder zum partiellen Kollabieren des Schaums bereits beim Aufschäumen führen.

Nach Angaben der GB-A-876 977 werden Polyurethanschaumstoffe hergestellt durch Umsetzung von Arylenpolyisocyanaten mit Polyester-polyolen mit einer Säurezahl von 5 bis 80, einem Wassergehalt von vorzugsweise 0,05 bis 2,5 Gew.% und einem Verhältnis von Hydroxyl-zu Carboxylgruppen von 3:1 bis 4:5 in Gegenwart von im wesentlichen inerten, flüchtigen Treibmittel mit einem Siedepunkt unter 75°C, ausgewählt aus der Gruppe der gesättigten und ungesättigten Kohlenwasserstoffe, der gesättigten oder ungesättigten Dialkylether und fluorhaltigen Halogenkohlenwasserstoffen, und gegebenenfalls Wasser. Als Treibmittel vorzugsweise verwendet werden Diethylether, Dichlorfluormethan und Trichlorfluormethan. Als verwendbare Treibmittel nicht genannt werden Cycloalkane, insbesondere Cyclopentan und Cyclohexan. Obgleich die beschriebenen Polyester-Polyurethanschaumstoffe energieabsorbierende und isolierende Eigenschaften aufweisen, besitzen sie eine zu hohe Wärmeleitfähigkeit, um die heute bei Polyurethan-Hartschaumstoffen, insbesondere in der Kühlmöbelindustrie, geforderten Isoliereigenschaften erbringen zu können.

Besonders die gesättigten und ungesättigten Kohlenwasserstoffe und hiervon insbesondere das zum Schäumen von Polystyrol geeignete n-Pentan, besitzen eine zu hohe Wärmeleitfähigkeit, um die bei PU-Hartschaumstoffen geforderten Isoliereigenschaften erbringen zu können. So beträgt z.B. die Wärmeleitfähigkeit von n-Pentan 150.10⁻⁴ W/m.°K und die von n-Butan sogar 163.10⁻⁴ W/m.°K bei 25°C.

Als weiteres Treibmittel sei Kohlendioxid genannt, das gemäß GB-A-21 16 574 in mindestens einer Aufbaukomponente zur Herstellung des PU-Hartschaumstoffs unter Druck gelöst, aus Salzen, wie z.B. Carbamaten, Carbonaten, wie z.B. Ammoniumcarbonat, oder Bicarbonaten thermisch abgespalten werden kann oder bei der Umsetzung von Isocyanat mit Wasser unter Bildung von Harnstoffgruppen gebildet wird. Neben den bekannten verarbeitungstechnischen Schwierigkeiten beim Umgang mit festem oder unter Druck stehendem gasförmigen Kohlendioxid, weisen die nach dieser Methode hergestellen PU-Hartschaumstoffe den schwerwiegenden Nachteil auf, daß das Kohlendioxid aufgrund seiner hohen Diffusionsgeschwindigkeit sehr rasch durch die Matrix des PU-Schaumstoffs diffundiert. Außerdem besitzt Kohlendioxid bei 25°C eine Wärmeleitfähigkeit von 164.10⁻⁴ W/m.°K; diese liegt daher auf dem Niveau von-n-Butan und ist um 85 % schlechter als die des bisher eingesetzten Trichlorfluormethans.

Die Aufgabe der vorliegenden Erfindung bestand darin, Polyurethan-Hartschaumstoffe mit einer geringen Wärmeleitfähigkeit herzustellen. Hierzu sollten die obengenannten Nachteile, insbesondere hinsichtlich der Umweltschädlichkeit und Toxizität des Treibmittels im bzw. bei der Herstellung des PU-Hartschaumstoffs möglichst vollständig beseitigt oder zumindest weitgehend vermieden werden. Die PU-Hartschaumstoffe sollten insbesondere zum Ausschäumen von Hohlräumen in Kühl- und Heißwasserspeichergeräten sowie als Zwischenschicht in Verbundelementen geeignet sein.

Diese Aufgabe konnte überraschenderweise durch die Verwendung von Cyclopentan oder von Mischungen aus Cyclopentan und Cyclohexan und anderen niedrigsiedenden mit den genannten Cycloalkanen homogen mischbaren Verbindungen als Treibmittel, in Verbindung mit Wasser, gelöst werden, wie es in den Ansprüchen definiert ist.

Gegenstand der Erfindung ist somit ein Verfahren zur Herstellung von PU-Hartschaumstoffen mit geringer Wärmeleitfähigkeit durch Umsetzung von
a) organischen und/oder modifizierten organischen Polyisocyanaten mit
b) mindestens einer höhenmolekularen Verbindung mit mindestens zwei reaktiven Wasserstoffatomen und gegebenenfalls
c) niedermolekularen Kettenverlängerungs und/oder Vernetzungsmitteln in Gegenwart von
d) Treibmitteln,
e) Katalysatoren und gegebenenfalls
f) Hilfsmitteln und/oder Zusatzstoffen,
das dadurch gekennzeichnet ist, daß man als Treibmittel (d) in Verbindung mit Wasser verwendet
d1) Cyclopentan oder
d2) Mischungen mit einem Siedepunkt unter 50°C, die enthalten oder vorzugsweise bestehen aus
   d2i) Cyclopentan oder einem Gemisch aus Cyclopentan und Cyclohexan und
   d2ii) mindestens einer niedrigsiedenden mit Cyclopentan und/ oder Cyclohexan homogen mischbaren Verbindung, vorzugsweise mit einem Siedepunkt unter 35°C, vorzugsweise ausgewählt aus der Gruppe der Alkane, Cycloalkane mit maximal 4 Kohlenstoffatomen, Dialkylether, Cycloalkylenether und Fluoralkane oder Mischungen aus mindestens zwei Verbindungen der genannten Gruppe

Gegenstände der Erfindung sind ferner spezielle Ausgestaltungen des erfindungsgemäßen Verfahrens entsprechend den Patentansprüchen 2 bis 13 und die Verwendung der erfindungsgemäß hergestellten PU-Hartschaumstoffe als Zwischenschicht für Verbundelemente und zum Ausschäumen von Hohlräumen, vorzugsweise in Kühlmöbelgehäusen oder in Heizungselementen.

Durch die Verwendung von Cyclopentan oder Mischungen aus Cyclopentan, Cyclohexan oder einem Gemisch dieser Cycloalkane und anderen niedrigsiedenden Treibmitteln, die in geringen Mengen zur Reduzierung des Siedepunkts der Treibmittelmischung eingesetzt werden, werden PU-Hartschaumstoffe mit einer geringen Wärmeleitfähigkeit erhalten. Vorteilhaft ist ferner, daß die erfindungsgemäß verwendbaren Cycloalkane eine im Vergleich zu organischen Verbindungen mit vergleichbarem Molekulargewicht niedrige Wärmeleitzahl mit etwa 105.10⁻⁴ W/m.°K besitzen und ihre Löslichkeit in der PU-Matrix sehr klein ist, so daß die Permeationsraten aus dem hergestellten PU-Hartschaumstoff äußerst gering sind. Erwähnenswert ist ferner die gute Verträglichkeit des PU-Hartschaumstoffs mit den als Deckschichten in Kühlmöbeln üblicherweise verwendeten Kunststoffmaterialien, insbesondere schlagfestem Polystyrol. Da diese Kunststoffe gegen Cycoalkane sehr gut beständig sind, kann die Spannungsrißkorrosion an der Kunststoffdeckschicht praktisch vollständig beseitigt werden.

Da die erfindungsgemäß hergestellten PU-Hartschaumstoffe bei der Weiterverarbeitung vorzugsweise mit einer Deckschicht versehen werden oder die Formulierungen zum Ausschäumen von Hohlräumen dienen, wird der durch die Brennbarkeit den Cycloalkane verursachte Nachteil weitestgehend eliminiert und ist somit vernachlässigbar.

Wie bereits dargelegt wurde, finden zur Herstellung der PU-Hartschaumstoffe nach dem erfindungsgemäßen Verfahren, mit Ausnahme der Treibmittel, die an sich bekannten Aufbaukomponenten Verwendung, zu denen im einzelnen folgendes auszuführen ist.
a) Als organische Polyisocyanate kommen die an sich bekannten aliphatischen, cycloaliphatischen, araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3-und -1,4-diisocyanat sowie beliebige Gemische dieser Isomeren, 1-Isocyanato-3, 3, 5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische und vorzugsweise aromatischen Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylen-diisocyanaten. Die organischen Di- und Polyisocyanate können einzeln oder in Form von Mischungen eingesetzt werden.
   Häufig werden auch sogenannte modifizierte mehrwertige lsocyanate, d.h. Produkte, die durch partielle chemische Umsetzung organischer Diund/oder Polyisocyanate erhalten werden, verwendet. Beispielhaft genannt seien Ester-, Harnstoff-, Biuret-, Allophanat-, Carbodiimid-, Isocyanuratund/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 1500 modifiziertes 4,4'-Diphenylmethan-diisocyanat oder 2,4- bzw. 2,6-Toluylen-diisocyanat, wobei als Di- bzw. Polyoxyalkylen-glykole, die einzeln oder als Gemische eingesetzt werden können; beispielsweise genannt seien: Diethylen-, Dipropylen-glykol, Polyoxyethylen-, Polyoxypropylen- und Polyoxypropylen-polyoxyethylen-glykole oder -triole. Geeignet sind auch NCO-Gruppen enthaltende Prepolymere mit NCO-Gehalten von 25 bis 9 Gew.%, vorzugsweise von 21 bis 14 Gew.%, bezogen auf das Gesamtgewicht, hergestellt aus den nachfolgend beschriebenen Polyester-und/oder vorzugsweise Polyether-polyolen und 4,4'-Diphenyimethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige, Carbodiimidgruppen und/oder lsocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat. Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gegebenenfalls gemischt werden. Besonders bewährt haben sich als organische Polyisocyanate und kommen daher vorzugsweise zur Anwendung zur Herstellung der PU-Hartschaumstoffe: Mischungen aus Toluylen-diisocyanaten und Roh-MDI oder Mischungen aus modifizierten Urethangruppen enthaltenden organischen Polyisocyanaten mit einem NCO-Gehalt von 33,6 bis 15 Gew.%, insbesondere solchen auf Basis von Toluylen-diisocyanaten, 4,4'-Diphenylmethan-diisocyanat, Diphenylmethan-diisocyanat-Isomerengemischen oder Roh-MDI und insbesondere Roh-MDI mit einem Diphenylmethan-diisocyanat-Isomerengehalt von 30 bis 80 Gew.%, vorzugsweise von 30 bis 55 Gew.%.
b) Als höhermolekulare Verbindungen mit mindestens zwei reaktiven Wasserstoffatomen (b) kommen, vorzugsweise Polyhydroxylverbindungen mit einer Funktionalität von 2 bis 8, vorzugsweise von 3 bis 8 und einer Hydroxylzahl von 150 bis 850, vorzugsweise von 350 bis 800, in Betracht.
   Beispielhaft genannt seien Polythioether-polyole, Polyesteramide, hydroxylgruppenhaltige Polyacetale, hydroxylgruppenhaltige aliphatische Polycarbonate und vorzugsweise Polyester-polyole und Polyether-polyole. Anwendung finden auch Mischungen aus mindestens zwei der genannten Polyhydroxylverbindungen, sofern diese eine durchschnittliche Hydroxylzahl im vorgenannten Bereich aufweisen.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäuremono- oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diolesind: Ethandiol, Diethylenglykol, 1,2-bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlendioxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner so als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in 40 Betracht. Die Polykondensation kann jedoch auch in flüssiger Phase in Gegenwart von Verdünnungs und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 3 und eine Hydroxylzahl von 150 bis 400 und insbesondere von 200 bis 300. Insbesondere als Polyhydroxylverbindungen verwendet werden jedoch Polyether-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natriumoder Kaliumethylat oder Kaliumisopropylat als Katalysatoren und mindestens einem Startermolekül, das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2-bzw.2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, NN- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw 1,4-Butylendiamin, 1,2-, 1,3-, 1,4-, 1,5 und 1,6-Hexamethylendiamin, Phenylendiamine, 2,3-, 2,4- und 2,6-Toluylendiamin und 4,4'-, 2,4'- und 2,2'-Diamino-diphenylmethan.
   Als Startermoleküle kommen ferner in Betracht: AIkanolamine, wie Ethanolamin, Diethanolamin, N-Methyl und N-Ethyl-ethanolamin, N-Methyl-und N-Ethyl-diethanolamin und Triethanolamin und Ammoniak.
   Vorzugsweise verwendet werden mehrwertige, insbesondere drei- und/oder höherwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Sucrose.
   Die Polyether-polyole besitzen eine Funktionalität von vorzugsweise 3 bis und insbesondere 3 und 6 und Hydroxylzahlen von vorzugsweise 300 bis 850 und ins besondere von 350 bis 800.
   Als Polyether-polyole eignen sich ferner Melamin-Polyether-polyol-Dispersionen gemäß EP-A-23 987 (US-A-4 293 657), Polymer-Polyether-polyol-Dispersionen, hergestellt aus Polyepoxiden und Epoxid harzhärtern in Gegenwart von Polyether-polyolen gemäß DE 29 43 689 (US 43 05 861), Dispersionen von aromatischen Polyestern in Polyhydroxylverbindungen gemäß EP-A-62 204 (US-A-44 35 537) oder DE-A 33 00 474, Dispersionen von organischen und/oder anorganischen Füllstoffen in Polyhydroxylverbindungen gemäß EP-A-11 751 (US 42 43 755), Polyharnstoff-Polyetherpolyol-Dispersionen gemäß DE-A-31 25 402, Tris(hydroxyalkyl)isocyanurat-Polyether-polyol-Dispersionen gemäß EP-A-136 571 (US 4 514 526) und Kristallitsuspensionen gemäß DE-A-33 42 176 und DE-A-33 42 177 (US 45 60 708), wobei die Ausführungen in den genannten Patentveröffentlichungen als Bestandteil der Patentbeschreibung zu betrachten sind. Die Polyether-polyole können ebenso wie die Polyester-polyole einzeln oder in Form von Mischungen verwendet werden. Ferner können sie mit den obengenannten Dispersionen, Suspensionen oder Polyester-polyolen sowie den hydroxylgruppenhaltigen Polyesteramiden. Polyacetalen und/oder Polycarbonaten gemischt werden.Als hydroxylgruppenhaltige Polyacetale kommen z. B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetate lassen sich geeignete Polyacetale herstellen. Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können. Zu den Polyesteramiden zählen z.B. die aus mehrwertigen gesättigten und/oder ungesättigten Carbonsäuren bzw. deren Anhydriden und Aminoalkoholen oder Mischungen aus mehrwertigen Alkoholen und Aminoalkoholen und/oder Polyaminen gewonnenen, vorwiegend linearen Kondensate. Als Polyhydroxylverbindungen besonders bewährt haben sich und daher vorzugsweise verwendet werden Mischungen, die bezogen auf 100 Gew.-Teile, zweckmäßigerweise enthalten:
   bi) 0 bis 95 Gew.-Teile, vorzugsweise 20 bis 80 Gew.-Teile eines mit Sucrose gestarteten Polyether-polyols mit einer Hydroxylzahl von 300 bis 500, vorzugsweise 350 bis 450 auf der Grundlage von 1,2-Propylenoxid oder 1,2-Propylenoxid und Ethylenoxid,
   bii) 0 bis 15 Gew.-Teile, vorzugsweise 5 bis 15 Gew.-Teile eines mit Sorbit gestarteten Polyether-polyols mit einer Hydroxylzahl von 400 bis 600, vorzugsweise von 450 bis 550 auf der Grundlage von 1,2-Propylenoxid oder 1,2-Propylenoxid und Ethylenoxid,
   biii) 0 bis 20 Gew.-Teile, vorzugweise 5 bis 15 Gew.-Teile eines mit Ethylendiamin gestarteten Polyether-polyols mit einer Hydroxylzahl von 700 bis 850, vorzugsweise von 750 bis 800 auf der Grundlage von 1,2-Propylenoxid
      und
   biiii) 0 bis 60 Gew.-Teile, vorzugsweise 5 bis 40 Gew.-Teile eines Polyether-polyols mit einer Hydroxylzahl von 400 bis 600, vorzugsweise von von 450 bis 550 auf Basis von 1,2-Propylenoxid oder 1,2-Propylenoxid und Ethylenoxid, hergestellt unter Verwendung einer Mischung aus Sucrose und Triethanolamin im Gewichtsverhältnis von 1:2 bis 2:1 als Startermoleküle.
c) Die PU-Hartschaumstoffe können ohne oder unter Mitverwendung von Kettenverlängerungs- und/oder Vernetzungsmitteln hergestellt werden. Zur Modifizierung der mechanischen Eigenschaften kann sich jedoch der Zusatz von Kettenverlängerungsmitteln, Vernetzungsmitteln oder gegebenenfalls auch Gemischen davon als vorteilhaft erweisen. Als Kettenverlängerungs-und/oder Vernetzungsmittel verwendet werden vorzugsweise Alkanolamine und insbesondere Diole und/oder Triole mit Molekulargewichten kleiner als 400, vorzugsweise von 60 bis 300. In Betracht kommen beispielsweise Alkanolamine, wie z. B. Ethanolamin und/oder Isopropanolamin, Dialkanolamine wie z.B. Diethanolamin, N-Methyl-, N-Ethyldiethanolamin, Düsopropanolamin, Trialkanolamine wie z.B. Triethanolamin, Trüsopropanolamin und die Additionsprodukte aus Ethylenoxid oder 1,2-Propylenoxid und Alkylendiaminen mit 2 bis 6 C-Atomen im Alkylenrest wie z.B. N,N'-Tetra(2-hydroxyethyl) ethylendiamin und N,N'-Tetra (2-hydroxypropyl)ethylendiamin, aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Tri-hydroxy-cyclohexan, Glycerin und Trimethylolpropan und niedermolekulare hydroxylgruppenhaltige Polyalkylenoxide auf Basis Ethylen- und/oder 1,2-Propylenoxid und aromatischen Diaminen, wie z.B. Toluylen-diaminen und/oder Diamino-diphenylmethanen sowie den vorgenannten Alkanolaminen, Diolen und/oder Triolen als Startermoleküle.
   Sofern zur Herstellung der PU-Hartschaumstoffe Kettenverlängerungsmittel, Vernetzungsmittel oder Mischungen davon Anwendung finden, kommen diese zweckmäßigerweise in einer Menge von 0 bis 20 Gew.%, vorzugsweise von 2 bis 5 Gew.%, bezogen auf das Gewicht der Polyhydroxylverbindung zum Einsatz.
d) Als Treibmittel zur Herstellung der PU-Hartschaumstoffe findet erfindungsgemäß vorzugsweise Cyclopentan (d1) Verwendung. Sehr gut bewährt haben sich jedoch auch Mischungen (d2), die enthalten
   d2i) Cyclopentan, oder eine Mischung aus Cyclopentan and Cyclohexan aus den genannten Cycloalkanen und
   d2ii) mindestens eine niedrigsiedende mit Cyclopentan und/oder Cyclohexan homogen mischbare Verbindung, vorzugsweise einer Verbindung mit einem Siedepunkt unter 35°C.

   Die als Treibmittel geeigneten Verbindungen der genannten Art können ausgewählt werden aus der Gruppe der Alkane, Cycloalkane mit maximal 4 Kohlenstoffatomen, Dialkylether, Cycloalkylenether und Fluoralkane. Verwendbar sind auch Mischungen aus mindestens zwei Verbindungen der genannten Verbindungsgruppen. Beispielhaft genannt seien im einzelnen: Alkane, wie z.B. Propan, n-Butan oder Isobutan, Cycloalkane, wie z.B. Cyclobutan, Dialkylether, wie z.B. Dimethylether, Methylethylether oder Diethylether, Cycloalkylenether, wie z. B. Furan, und Fluoralkane, die in der Troposphäre abgebaut werden und deshalb für die Ozonschicht unschädlich sind, wie z.B. Trifluormethan, Difluormethan, Difluorethan, Tetrafluorethan und Heptafluorpropan.
d) Die erfindungsgemäß verwendbaren Treibmittel werden in Verbindung mit Wasser verwendet, wobei sich folgende Kombinationen vorzüglich bewährt haben, so daß sie zweckmäßigerweise eingesetzt werden: Wasser und Cyclopentan, Wasser, Cyclopentan oder eine Mischung aus Cyclopentan und Cyclohexan und mindestens eine Verbindung aus der Gruppe n-Butan, Isobutan, Cyclobutan, Dimethylether, Diethylether, Furan, Trifluormethan, Difluormethan, Difluorethan, Tetrafluorethan und Heptafluorpropan. Die in Kombination mit Cyclopentan und insbesondere mit Cyclohexan eingesetzte Menge an niedrigsiedenden, mit Cyclopentan und/oder Cyclohexan homogen mischbaren Verbindungen wird so bemessen, daß die erhaltene Mischung einen Siedepunkt von unter 50°C, vorzugsweise von 30°C bis 0°C besitzt. Die hierfür erforderliche Menge ist abhängig von dem Verlauf der Siedepunktskunren der Mischung und kann nach bekannten Methoden experimentell ermittelt werden. PU-Hartschaumstoffe mit geringer Leitfähigkeit werden insbesondere dann erhalten, wenn als Treibmittel (d) pro 100 Gew-Teile der Aufbaukomponente (b) verwendet werden:
   d1) 3 bis 22 Gew.-Teile, vorzugsweise 5 bis 18 Gew.-Teile und insbesondere 8 bis 14 Gew.-Teile Cyclopentan und bis 7 Gew.-Teile, vorzugsweise 2,0 bis 5,0 Gew.-Teile und insbesondere 2,2 bis 4,5 Gew.-Teile Wasser oder
   d2i) 2 bis 22 Gew.-Teile, vorzugsweise 5 bis 19 Gew.-Teile und insbesondere 9 bis 19 Gew.-Teile Cyclopentan bzw. des Gemischs aus Cyclopentan und Cyclohexan,
   d2ii) 0,1 bis 18 Gew.-Teile, vorzugsweise 0,5 bis 10 Gew.-Teile und insbesondere 1,0 bis 6,0 Gew.-Teile mindestens einer mit Cyclopentan und/oder Cyclohexan homogen mischbaren Verbindung mit einem Siedepunkt unter 35°C, ausgewählt aus der Gruppe der Alkane, Cycloalkane mit maximal 4 C-Atomen, Dialkylether, Cycloalkylenether und vorzugsweise Fluoralkane und bis 7 Gew.-Teile, vorzugsweise 2,0 bis 5,0 Gew.-Teile und insbesondere 2,2 bis 4,5 Gew.-Teile Wasser. Zur Herstellung der PU-Hartschaumstoffe wird das Cyclopentan (d1) oder die Treibmittelmischung (d2) in Verbindung mit Wasser nach an sich bekannten Methoden mindestens einer Aufbaukomponente (a) bis (c) zur Herstellung des PU-Hartschaumstoffs, gegebenenfalls unter Druck, einverleibt oder es wird direkt der Reaktionsmischung, zweckmäßigerweise mittels einer geeigneten Mischvorrichtung, zugeführt.
d) Als Katalysatoren (e) werden insbesondere Verbindungen verwendet, die die Reaktion der Hydroxylgruppen enthaltenden Verbindungen der Komponenten (b) und gegebenenfalls (c) mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydro
e) pyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin oder -hexandiamin, Pentamethyl-diethylentriamin, Tetramethyl-diaminoethylether, Bis-(dimethyl-aminopropyl)-hamstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Trüsopropanolamin, N-Methyl-und N-Ethyl-diethanolamin und Dimethylethanolamin. Als Katalysatoren kommen ferner in Betracht: Tris(dialkylaminoalkyl)-s-hexahydrotriazine, insbesondere Tris-(N,N-dimethyl-aminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.%, insbesondere 0,05 bis 2 Gew.% Katalysator bzw. Katalysatorkombination bezogen auf das Gewicht der Komponente (b).
f) Der Reaktionsmischung zur Herstellung der PU-Hartschaumstoffe können gegebenenfalls auch noch Hilfsmittel und/oder Zusatzstoffe (f) einverleibt werden. Genannt seien beispielsweise oberflächenaktive Substanzen, Schaumstabilisatoren, Zeltregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zeltstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und 10 Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt. Geeignete Flammschutzmittel sind beispielsweise Trikresylphosphat, Tris-(2-chlorethyl)phosphat, Tris(2-chlorpropyl)phosphat, Tris(1,3-dichlorpropyl)phosphat, Tris-(2,3-dibrompropyl)phosphat und Tetrakis(2-chlorethyl)-ethylendiphosphat.

Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen der erfindungsgemäß hergestellten PU-Hartschaumstoffe verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.

Nähere Angaben über die oben genannten anderen üblichen Hilfs- und Zusatzstoffe sind der Fachliteratur, beispielsweise der Monographie von J. H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und z. Auflage, 1966 und 1983 zu entnehmen.

Zur Herstellung der PU-Hartschaumstoffe werden die organischen, gegebenenfalls modifizierten Polyisocyanate (a), die höhermolekularen Verbindungen mit mindestens zwei reaktiven Wasserstoffatomen (b) und gegebenenfalls Kettenverlängerungsmittel und/oder Vernetzungsmittel (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) 0,85 bis 1,25:1, vorzugsweise 0,95 bis 1,15:1 und insbesondere ungefähr 1,0 bis 1,10:1 beträgt. Sofern die Urethangruppen enthaltende Schaumstoffe durch die Bildung von Isocyanuratgruppen modifiziert werden, beispielsweise zur Erhöhung der Flammwidrigkeit, wird üblicherweise ein Verhältnis von NCO-Gruppen der Polyisocyanate (a) zur Summe der reaktiven Wasserstoffatome der Komponente (b) und gegebenenfalls (c) von 1,5 bis 10:1, vorzugsweise 1,5 bis 6:1 angewandt.

Die PU-Hartschaumstoffe können diskontinuierlich oder kontinuierlich nach dem Prepolymer-oder vorzugsweise nach dem one shot-Verfahren mit Hilfe bekannter Mischvorrichtungen hergestellt werden. Als besonders vorteilhaft hat es sich erwiesen, nach dem Zweikomponenten-Verfahren zu arbeiten und die Aufbaukomponente (b), (d), (e) und gegebenenfalls (c) und (f) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel (d) zu verwenden.

Die Ausgangskomponenten werden bei einer Temperatur von 15 bis 90°C, vorzugsweise von 20 bis 35°C gemischt und in ein offenes, gegebenenfalls temperiertes Formwerkzeug eingebracht, in der man die Reaktionsmischung zur Vermeidung einer verdichteten Randzone im wesentlichen druckfrei aufschäumen läßt. Zur Bildung von Verbundelementen beschichtet man zweckmäßigerweise die Rückseite einer Deckschicht, z.B. durch Begießen oder Besprühen, mit der schaumfähigen Reaktionsmischung und läßt diese aufschäumen und zum PU-Hartschaumstoff aushärten. Die nach dem erfindungsgemäßen Verfahren hergestellten PU-Hartschaumstoffe besitzen vorzugsweise Dichten von 20 bis 50 g/I und eine Wärmeleitfähigkeit von 0,020 bis 0,024 W/m.°K.

Die PU-Hartschaumstoffe finden vorzugsweise Verwendung als wärmedämmende Zwischenschicht in Verbundelementen und zum Ausschäumen von Hohlräumen in Kühlmöbelgehäusen, insbesondere für Kühlschränke und Gefriertruhen, und als Außenmantel von Heißwasserspeichern. Die Produkte eignen sich ferner als Rohrschalen.

### Beispiel 1

### Herstellung des PU-Hartschaumstoffs

### A-Komponente

### Mischung aus

| | |
|---|---|
| 82, 4 Gew.-Teilen | eines Polyether-polyols der Hydroxylzahl 400, hergestellt durch anionische Polyaddition von 1,2-Propylenoxid an Saccharose |
| 3,6 Gew.-Teilen | Wasser, |
| 2,3 Gew.-Teilen | N,N-Dimethyl-cyclohexylamin, |
| 0,8 Gew-Teilen | eines Schaumstabilisators auf Silikonbasis (Tegostab® B8409 der Firma Goldschmitt AG; Essen) und |
| 10,9 Gew.-Teilen | Cyclopentan |

### B-Komponente

Mischung aus Diphenylmethan-diisocyanaten und Polyphenyl-polymethylenpoyisocyanaten (Roh-MDI, MCO-Gehalt 31 Gew.-%).

100 Gew.-Teile der A-Komponente und 148 Gew.-Teile der B-Komponente wurden mittels eines hochtourigen Rührer (2.000 UpM) bei 23°C intensiv gemischt, die Reaktionsmischung in einen offenen Karton mit den Innenabmessungen 20x20x20 cm eingebracht und aufschäumen gelassen.

Man erhielt einen gleichförmigen PU-Hartschaumstoff mit einem mittleren Zelldurchmesser von 300 µm, einer Warämeleitfähigkeit, gemessen bei 10°C, von 0,021 W/m.°K und einem Raumgewicht von 22 g/l.

### Beispiel 2

### A-Komponente

### Mischung aus

| | |
|---|---|
| 81,4 Gew.-Teilen | eines Polyether-polyols der Hydroxylzahl 400, hergestellt durch anionische Polyaddition von 1.2-Pro-pylenoxid an Saccharose |
| 3,5 Gew.-Teilen | Wasser; |
| 2,3 Gew.-Teilen | N,N-Dimetyl-cyclohexylamin, |
| 0,8 Gew.-Teilen | eines Schaumstoffstabilisators auf SilikonbasisTegostab® B 8409) und |
| 12,0 Gew.-Teilen | einer Treibmittelmischung, bestehend aus 8 Gew.-Teilen Cyclopentan und 4 Gew.-Teilen Diethylether |

### B-Komponente: analog Beispiel 1

100 Gew.-Teile der A-Komponente und 145 Gew.-Teile der B-Komponente wurden analog den Angaben des Beispiels 1 zur Reaktion gebracht. Man erhielt einen PU-Hartschaumstoff mit einem Raumgewicht von 23 g/l und einer Wärmeleitfähigkeit, gemessen bei 10°C, von 0,022 W/m°.K.

### Beispiel 3

### A-Komponente

### Mischung aus

| | |
|---|---|
| 82,9 Gew.-Teilen | eines Polyether-polyols der Hydroxylzahl 400, hergestellt durch anionische Polyaddition von 1,2-Propylenoxid an Saccharose |
| 3,0 Gew.-Teilen | Wasser, |
| 2,3 Gew.-Teilen | N,N-Dimethyl-cyclohexylamin, |
| 0,8 Gew.-Teilen | eines Schaumstabilisators auf Silikonbasis (Tegostab® B 8409) und |
| 11,0 Gew.-Teilen | einer Treibmittelmischung, bestehend aus 8 Gew.-Teilen Cyclopentan und 3 Gew.-Teilen Isobutan |

### B-Komponente: analog Beispiel 1

100 Gew.-Teile 10 der A-Komponente und 138 Gew.-Teile der B-Komponente wurden analog den Angaben des Beispiel 1 zur Reaktion gebracht. Man erhielt einen PU-Hartschaumstoff mit einem Raumgewicht von 24 g/I und einer Wärmeleitfähigkeit von 0,024 W/m.°K.

## Patentansprüche

1. Verfahren zur Herstellung von Polyurethan-Hartschaumstoffen mit geringer Wärmeleitfähigkeit durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Treibmitteln
e) Katalysatoren und gegebenenfalls
f) Hilfsmitteln und/oder Zusatzstoffen,
**dadurch gekennzeichnet, daß** das Treibmittel (d) aus Cyclopentan (d1) und Wasser besteht

2. Verfahren nach Anspruch 1, **dadurch gekennzeichnet, daß** als Treibmittel (d) pro 100 Gew.-Teile der Aufbaukomponente (b) verwendet werden:
d1) 3 bis 22 Gew.-Teile Cyclopentan und bis 7 Gew.-Teile Wasser

3. Verfahren zur Herstellung von Polyurethan-Hartschaumstoffen mit geringer Wärmeleitfähigkeit durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Treibmitteln,
e) Katalysatoren und gegebenenfalls
f) Hilfsmitteln und/oder Zusatzstoffen,
**dadurch gekennzeichnet, daß** man als Treibmittel (d) in Verbindung mit Wasser verwendet
d2) Mischungen mit einem Siedepunkt unter 50°C, bestehend aus
d2i) Cyclopentan oder einem Gemisch aus Cyclopentan und Cyclohexan,
d2ii) mindestens einer mit Cyclopentan und/oder Cyclohexan homogen mischbaren Verbindung mit einem Siedepunkt unter 35°C und bis 7 Gew.-Teilen Wasser pro 100 Gew.-Teilen der Aufbaukomponente (b)

4. Verfahren zur Herstellung von Polyurethan-Hartsschaumstoffen mit geringer Wärmeleitfähigkeit durch Umsetzung von
a) rganischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs und/oder Vernetzungsmitteln
in Gegenwart von
d) Treibmitteln,
e) Katalysatoren und gegebenenfalls
f) Hilfsmitteln und/oder Zusatzstoffen,
**dadurch gekennzeichnet, daß** man als Treibmittel (d) in Verbindung mit Wasser verwendet
d2) Mischungen mit einem Siedepunkt unter 50°C, enthaltend
d2i) 2 bis 22 Gew.-Teile Cyclopentan, Cyclohexan oder ein Gemisch dieser Cycloalkane und
d2ii) 0,1 bis 18 Gew.-Teile mindestens einer niedrigsiedenden mit Cyclopentan und/oder Cyclohexan homogen mischbaren Verbindung mit einem Siedepunkt unter 35°C und bis 7 Gew.-Teilen Wasser, jeweils pro 100 Gew.-Teilen der Aufbaukomponente (b).

5. Verfahren zur Herstellung von Polyurethan-Hartschaumstoffen mit geringer Wärmeleitfähigkeit durch Umsetzung von
a) organischen und/oder modifizierten anorganischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Treibmitteln,
e) Katalysatoren und gegebenenfalls
f) Hilfsmitteln und/oder Zusatzstoffen,
**dadurch gekennzeichnet, daß** man als Treibmittel (d) in Verbindung mit Wasser verwendet
d2) Mischungen mit einem Siedepunkt unter 50 °C, enthaltend
d2i) Cyclopentan oder ein Gemisch aus Cyclopentan und Cyclohexan und
d2ii) mit Cyclopentan und/oder Cyclohexan homogen mischbare Verbindungen, ausgewählt aus der Gruppe der Alkane, Cycloalkane mit maximal 4 Kohlenstoffatomen, Dialkylether, Cycloalkylenether und Fluoralkane oder Mischungen aus mindestens zwei Verbindungen der genannten Gruppe.

6. Verfahren nach einem der Ansprüche 3 bis 5, **dadurch gekennzeichnet, daß** die Treibmittelmischung (d2) einen Siedepunkt von unter 30°C besitzt.

7. Verfahren nach Anspruch 3 bis 6, **dadurch gekennzeichnet**, das man als Treibmittel (d) in Verbindung mit Wasser verwendet.
d2) eine Mischung, bestehend aus
d2i) Cyclopentan, Cyclohexan oder ein Gemsich dieser Cycloalkane und
d2ii) mindestens einer Verbindung aus der Gruppe n-Butan, Isobutan, Cyclobutan, Dimethylether, Diethylether, Furan, Trifluormethan, Difluormethan, Difluorethan, Tetrafluorethan und Heptafluorpropan.

8. Verfahren nach Anspruch 5, **dadurch gekennzeichnet, daß** als Treibmittel (d) pro 100 Gewichtsteile der Aufkomponente (b) verwendet werden
d2i) 2 bis 22 Gewichtsteile Cyclopentan bzw. des Gemischs aus Cyclopentan und Cyclohexan,
d2ii) 0,1 bis 18 Gewichtsteile mindestens einer mit Cyclopentan und/oder Cyclohexan homogen mischbaren Verbindung, ausgewählt aus der Gruppe der Alkane, Cycloalkane mit maximal 4 Kohlenstoffatomen, Dialkylether, Cycloalkylenether und Fluoralkane in Verbindung mit bis 7 Gewichtsteilen Wasser.

9. Verfahren nach einem der Ansprüche 5 bis 8, **dadurch gekennzeichnet, daß** d2i) aus Cyclopentan besteht.

10. Verfahren nach einem der Ansprüche 1 bis 9, **dadurch gekennzeichnet, daß** man als organische Polyisocyanate (a) eine Mischung aus Diphenylmethan-diisocyanaten und Polyphenyl-polymethylen-polyisocyanaten mit einem Diphenylmethan-diisocyanat-Isomerengehalt von 30 bis 80 Gew.-% verwendet.

11. Verfahren nach einem der Ansprüche 1 bis 10, **dadurch gekennzeichnet, daß** man als höhermolekulare Verbindungen (b) mindestens eine Polyhydroxylverbindung mit einer Funktionalität von 2 bis 8 und einer Hydroxylzahl von 150 bis 850 verwendet.

12. Verfahren nach einem der Ansprüche 1 bis 11, **dadurch gekennzeichnet, daß** die Polyurethan-Hartschaumstoffe in Abwesenheit von Zusatzstoffen aus der Gruppe der Füllstoffe hergestellt werden.

13. Verwendung von Polyurethan-Hartschaumstoffen, hergestellt nach dem Verfahren gemäß einem der Ansprüche 1 bis 12, als Zwischenschicht für Verbundelemente und zum Ausschäumen von Hohlräumen in Kühlmöbelgehäusen oder Heizungselementen.

14. Polyurethan-Hartschaumstoffe, hergestellt gemäß den Verfahren nach einem der Ansprüche 1 bis 12.

15. Polyurethan-Hartschaumstoffe, hergestellt gemäß den Verfahren nach einem der Ansprüche 1 bis 12, **dadurch gekennzeichnet, daß** diese als Treibmittel Cyclopentan und keine Zusatzstoffe aus der Gruppe der Füllstoffe enthalten.

## Claims

1. A process for the preparation of rigid polyurethane foams of low thermal conductivity by reacting
a) organic and/or modified organic polyisocyanate with:
b) one or more high-molecular-weight compounds having two or more reactive hydrogen atoms, and, if desired,
c) a low-molecular-weight chain extender and/or cross-linking agent
in the presence of
d) a blowing agent,
e) a catalyst and, if desired,
f) an auxiliary and/or additive,
wherein the blowing agent (d) consists of cyclopentane (d1) and water.

2. A process as claimed in claim 1, wherein the blowing agent (d) used consists, based on 100 parts by weight of starting component (b), of:
d1) from 3 to 22 parts by weight of cyclopentane and up to 7 parts by weight of water.

3. A process for the preparation of rigid polyurethane foams of low thermal conductivity by reacting
a) an organic and/or modified organic polyisocyanate with
b) one or more high-molecular-weight compounds having two or more reactive hydrogen atoms, and, if desired
c) a low-molecular-weight chain extender and/or cross-linking agent
in the presence of
d) a blowing agent,
e) a catalyst and, if desired,
f) an auxiliary and/or additive,
wherein a blowing agent (d) used with water is
d2) a mixture having a boiling point of below 50°C, consisting of
d2i) cyclopentane or a mixture of cyclopentane and cyclohexane,
d2ii) one or more compounds having a boiling point of below 35°C which form a homogeneous mixture with cyclopentane and/or cyclohexane, and
up to 7 parts by weight of starting component (b).

4. A process for the preparation of rigid polyurethane foams of low thermal conductivity by reacting
a) an organic and/or modified organic polyisocyanate with
b) one or more high-molecular-weight compounds having two or more reactive hydrogen atoms, and, if desired,
c) a low-molecular-weight chain extender and/or cross-linking agent
in the presence of
d) a blowing agent,
e) a catalyst and, if desired,
f) an auxiliary and/or additive,
wherein the blowing agent (d) used together with water is
d2) a mixture having a boiling point of below 50°C, consisting of
d2i) from 2 to 22 parts by weight of cyclopentane, cyclohexane or a mixture of these cycio- alkanes and
d2ii) from 0.1 to 18 parts by weight of one or more low-boiling compounds having a boiling point of below 35°C which form a homogeneous mixture with cyclopentane and/or cyclohexane, and
up to 7 parts by weight of water, in each case per
100 parts by weight of starting component (b).

5. A process for the preparation of rigid polyurethane foams of low thermal conductivity by reacting
a) an organic and/or modified organic polyiso cyanate with
b) one or more high-molecular-weight compounds having two or more reactive hydrogen atoms, and, if desired,
c) a low-molecular-weight chain extender and/or cross-linking agent
in the presence of
d) a blowing agent,
e) a catalyst and, if desired,
f) an auxiliary and/or additive,
wherein the blowing agent (d) used together with water is
d2) a mixture having a boiling point of below 50°C, consisting of
d2i) cyclopentane or a mixture of cyclopentane and cyclohexane, and
d2ii) compounds which form a homogeneous mixture with cyclopentane and/or cyclohexane, selected from the group consisting of alkanes, cycloalkanes having a maximum of 4 carbon atoms, dialkyi ethers, cycloalkylene ethers and fluoroalkanes, or mixtures of two or more compounds of said group.

6. A process as claimed in claim 3 or 4 or 5, wherein the blowing agent mixture (d2) has a boiling point of below 30°C.

7. A process as claimed in claim 3 or 4 or 5 or 6, wherein the blowing agent (d) used together with water is
d2) a mixture consisting of
d2i) cyclopentane, cyclohexane or a mix ture of these, and
d2ii) one or more compounds from the group consisting of n-butane, isobutane, cyclobutane, dimethyl ether, diethyl ether, furan, trifluoromethane, difluoromethane, difluoroethane, tetrafluoroethane and heptafluoro- propane.

8. A process as claimed in claim 5, wherein the blowing agent (d) used consists, based on 100 parts by weight of starting component (b), of
d2i) from 2 to 22 parts by weight of cyclopentane respecitvely cyclohexane, and
d2ii) from 0.1 to 18 parts by weight of one or more compounds which form a homogeneous mixture with cyclopentane and/or cyclohexane, selected from the group consisting of the alkanes, cycloalkanes having a maximum of 4 carbon atoms, dialkyi ethers, cycloalkylene ethers and fluoroalkanes, together with up to 7 parts by weight of water.

9. A process as claimed in claim 5 or 6 or 7 or 8, wherein d2i) consists of cyclopentane.

10. A process as claimed in claim 1 or 2 or 3 or 4 or 5 or 6 or 7 or 8 or 9, wherein the organic polyisocyanate (a) used is a mixture of diphenylmethane disocyanates and polyphenyl-polymethylene polyisocyanates containing from 30 to 80 % by weight of diphenylmethane diisocyanate isomers.

11. A process as claimed in claim 1 or 2 or 3 or 4 or 5 or 6 or 7 or 8 or 9 or 10, wherein the high-molecular-weight compound (b) used is one or more polyhydroxyl compounds having a functionality of from 2 to 8 and a hydroxyl number of from 150 to 850.

12. A process as claimed in claim 1 or 2 or 3 or 4 or 5 or 6 or 7 or 8 or 9 or 10 or 11, wherein the rigid polyurethane foams are prepared in the absence of filler additives.

13. The use of rigid polyurethane foams prepared by a process as claimed in claim 1 or 2 or 3 or 4 or 5 or 6 or 7 or 8 or 9 or 10 or 11 or 12 as an intermediate layer for composite elements and for foam-filling cavities in refrigeration equipment casingor heating elements.

14. A rigid polyurethane foam prepared by a process as claimed in daim 1 or 2 or 3 or 4 or 5 or 6 or 7 or 8 or 9 or 10 or 11 or 12.

15. A rigid polyurethane foam prepared by a process as claimed in daim 1 or 2 or 3 or 4 or 5 or 6 or 7 or 8 or 9 or 10 or 11 or 12, which comprises cyclopentane as the blowing agent and contains no filler additives.

## Revendications

1. Procédé pour la préparation de produits alvéolaires rigides de polyuréthannes à basse conductibilité calorifique par réaction de
a) des polyisocyanates organiques et/ou des polyisocyanates organiques modifiés, avec
b) au moins un composé à haut poids molécu laire contenant au moins deux atomes d'hydrogène réactifs et le cas échéant,
c) des agents d'allongement des chaînes et/ou agents réticulants à bas poids moléculaire,
en présence
d) d'agents gonflants,
e) de catalyseurs et, le cas échéant,
f) de produits auxiliaires et/ou additifs, **caractérisé en ce que** l'agent gonflant (d) consiste en cyclopentane (d1) et eau.

2. Procédé selon la revendication 1, **caractérisé en ce que** l'on utilise, en tant qu'agent gonflant (d), pour 100 parties en poids du composant de synthèse (b) :
d1)3) 22 parties en poids de cyclopentane et jusqu'à 7 parties en poids d'eau.

3. Procédé pour la préparation de produits alvéolaires rigides de polyuréthannes à basse conductibilité calorifique par réaction
a) de polyisocyanates organiques et/ou de polyisocyanates organiques modifiés, avec
b) au moins un composé à haut poids moléculaire, contenant au moins deux atomes d'hydrogène réactifs et, le cas échéant,
c) des agents d'allongement des chaînes et/ou agents réticulants à bas poids moléculaire
en présence
d) d'agents gonflants,
e) de catalyseurs et, le cas échéant
f) de produits auxiliaires et/ou additifs,
**caractérisé en ce que** l'on utilise, en tant qu'agents gonflants (d) en combinaison avec de l'eau,
d2) des mélanges, dont le point d'ébullition est inférieur à 50°C, et qui consistent en
d2i) du cyclopentane ou un mélange de cyclopentane et de cyclohexane,
d2ii) au moins un composé à point d'ébullition inférieur à 35°C et donnant des mélanges homogènes avec le cyclopentane et/ou le cyclohexane, et jusqu'à 7 parties en poids d'eau pour 100 parties en poids du composant de synthèse b).

4. Procédé pour la préparation de produits alvéolaires rigides de polyuréthannes à basse conductivité calorifique, par réaction
a) de polyisocyanates organiques et/ou de polyisocyanates organiques modifiés avec
b) au moins un composé à haut poids moléculaire contenant au moins deux atomes d'hydrogène et, le cas échéant,
c) des agents d'allongement des chaînes et/ou agents réticulants à bas poids moléculaire,
en présence
d) d'agents gonflants,
e) de catalyseurs et, le cas échéant,
f) de produits auxiliaires et/ou additifs,
**caractérisé en ce que** l'on utilise, en tant qu'agents gonflants (d) en combinaison avec de l'eau,
d2) des mélanges ayant un point d'ébullition inférieur à 50 °C et contenant
d2i) 2 à 22 parties en poids de cyclopentane, de cyclohexane ou d'un mélange de ces cycloalcanes et
d2ii) 0,1 à 18 parties en poids d'au moins un composé à bas point d'ébullition, inférieur à 35°C, et donnant des mélanges homogènes avec le cyclopentane et/ou le cyclohexane, et jusqu'à 7 parties en poids d'eau, toutes ces quantités se rapportant à 100 parties en poids du composant de synthèse b).

5. Procédé pour la préparation de produits alvéolaires rigides de polyuréthannes à basse conductibilité calorifique par réaction
a) de polyisocyanates organiques et/ou de polyisocyanates organiques modifiés, avec
b) au moins un composé à haut poids moléculaire contenant au moins deux atomes d'hydrogène réactifs et, le cas échéant,
c) des agents d'allongement des chaînes et/ou agents réticulants à bas poids moléculaire
en présence
d) d'agents gonflants,
e) de catalyseurs et, le cas échéant,
f) de produits auxiliaires et/ou additifs,
**caractérisé en ce que** l'on utilise, en tant qu'agents gonflants (d) en combinaison avec de l'eau,
d2) des mélanges ayant un point d'ébullition inférieur à 50°C et qui contiennent
d2i) du cyclopentane ou un mélange du cyclopentane et du cyclohexane et
d2ii) des composés donnant des mélanges homogènes avec le cyclopentane et/ou le cyclohexane et choisis pami les alcanes, les cycloalcanes à quatre atomes de carbone au maximum, les éthers dialkyliques, les éthers cycloalkyléniques et les fluoralcanes ou des mélanges consistant en au moins deux composés de ce groupe.

6. Procédé selon une des revendications 3 à 5, **caractérisé en ce que** le mélange gonflant (d2) a un point d'ébullition inférieur à 30°C.

7. Procédé selon les revendications 3 à 6, **caractérisé en ce que** l'on utilise en tant qu'agent gonflant (d) en combinaison avec de l'eau :
d2) un mélange consistant en
d2i) du cyclopentane, du cyclohexane ou un mélange de ces cycloalcanes et
d2ii) au moins un composé choisi dans le groupe formé par le n-butane, l'isobutane, le cyclobutane, l'éther diméthylique, l'éther diéthylique, le furanne, le trifluorométhane, le difluorométhane, le difluoréthane, le tétrafluoréthane et l'heptafluoropropane.

8. Procédé selon la revendication 5, **caractérisé en ce que** l'on utilise, en tant qu'agent gonflant (d), pour 100 parties en poids du composant de synthèse (b)
d2i) 2 à 22 parties en poids de cyclopentane ou bien du mélange de cyclopentane et de cyclohexane,
d2ii) 0,1 à 18 parties en poids d'au moins un composé donnant des mélanges homogènes avec le cyclopentane et/ou le cyclohexane et choisi dans le groupe formé par les alcanes, les cycloalcanes à quatre atomes de carbone au maximum, les éthers dialkyliques, les éthers cycloalkyléniques et les fluoralcanes, en combinaison avec jusqu'à 7 parties en poids d'eau.

9. Procédé selon une des revendications 5 à 8, **caractérisé en ce que** le composant d2i) consiste en cyclopentane.

10. Procédé selon une des revendications 1 à 9, **caractérisé** on ce que l'on utilise, en tant que polyisocyanate organique (a), un mélange de diphénylméthanediisocyanaates et de polyphénylpolyméthylènepolyisocyanates à une teneur de 30 à 80 % en poids en isomères du diphénylméthanediisocyanate.

11. Procédé selon une des revendications 1 à 10, **caractérisé en ce que** l'on utilise, en tant que composé à haut poids moléculaire (b), au moins un composé polyhydroxylé ayant une fonctionnalité de 2 à 8 et un indice de 150 à 850.

12. Procédé selon une des revendications 1 à 11, **caractérisé en ce que** le produit alvéolaire rigide de polyuréthanne est préparé en l'absence d'additifs pris dans le groupe des matières de charge.

13. Utilisation des produits alvéolaires rigides de polyuréthannes préparés par un procédé selon l'une des revendications 1 à 12 en couche intermédiaire pour des éléments composites et pour remplir de produit alvéolaire les espaces creux des armoires de réfrigérateurs ou des éléments de chauffage.

14. Produits alvéolaires rigides de polyuréthannes préparés par les procédés selon l'une des revendications 1 à 12.

15. Produits alvéolaires rigides de polyuréthannes préparés par les procédés selon une des revendications 1 à 12, **caractérisés en ce qu'**ils contiennent du cyclopentane en tant qu'agent gonflant et ne contiennent pas d'additif pris dans le groupe des matières de charge.
